Europäisches Patentamt

**European Patent Office**

Office européen des brevets

(11) Veröffentlichungsnummer: **0 254 028**
**B1**

(12) **EUROPÄISCHE PATENTSCHRIFT**

(45) Veröffentlichungstag der Patentschrift:
07.11.90

(51) Int. Cl.⁵: **B21C 37/08**, F16L 51/02

(21) Anmeldenummer: 87108658.3

(22) Anmeldetag: 16.06.87

(54) Zugvorrichtung für den kontinuierlichen Durchzug eines stangen- oder rohrförmigen Materialstranges.

(30) Priorität: 23.06.86 DE 3620953

(43) Veröffentlichungstag der Anmeldung:
27.01.88 Patentblatt 88/4

(45) Bekanntmachung des Hinweises auf die Patenterteilung:
07.11.90 Patentblatt 90/45

(84) Benannte Vertragsstaaten:
AT BE CH DE ES FR GB GR IT LI LU NL SE

(56) Entgegenhaltungen:
EP-A- 0 127 127
US-A- 1 321 463
US-A- 2 792 799

(73) Patentinhaber: Schoeller Werk GmbH & Co KG,
Postfach 67, D-5374 Hellenthal(DE)

(72) Erfinder: Crome, Rolf, Dipl.-Ing., Im Bongert 15,
D-5374 Hellenthal(DE)

(74) Vertreter: Langmaack, Jürgen, Dipl.-Ing. et al,
Patentanwälte Maxton . Maxton . Langmaack
Goltsteinstrasse 93 Postfach 51 08 06,
D-5000 Köln 51(DE)

ACTORUM AG

## Beschreibung

Die Erfindung betrifft eine Zugvorrichtung für den kontinuierlichen Durchzug eines stangen- oder rohrförmigen Materialstranges, insbesondere für den Materialdurchzug einer Einrichtung zum Herstellen von längsnahtgeschweißten Rohren aus einem Metallband, das durch Formrollen zu einem Schlitzrohr geformt und anschließend zu einem geschlossenen Rohr verschweißt wird, mit zwei parallel zueinander über Umlenkräder geführten angetriebenen Endlosbändern, deren Zugtrums an den zu fördernden Materialstrang angedrückt sind, wobei die Endlosbänder jeweils auf ihrer außenliegenden Seite mit einer Vielzahl von Ziehbacken versehen sind, die auf ihrer nach außen gerichteten Seite eine in Bandlängsrichtung verlaufende Profilrinne aufweisen, die so geformt ist, daß die Profilrinnen von je zwei einander zugekehrten Ziehbacken im Querschnitt sich zur Querschnittsform des zu fördernden Materialstranges ergänzen, wobei jedem Endlosband eine, an der Innenseite des Zugtrums anliegende Stützschiene zugeordnet ist und wobei wenigstens eine der Stützschienen quer zum Materialstrang verschieb- und feststellbar gelagert ist.

Aus der DE-A 1 957 834 ist eine Zugvorrichtung der vorstehend bezeichneten Art bekannt. Die als sogenannte Zugraupen ausgebildeten Endlosbänder werden hierbei jeweils mit ihrem Zugtrum auf den zu fördernden Materialstrang gedrückt, so daß der Materialstrang durch den entstehenden Reibschluß kontinuierlich in seiner Längsrichtung bewegt werden kann. Bei einer Einrichtung zur Herstellung von längsnahtgeschweißten Rohren aus einem Blechband ist diese vorgekannte sogenannte Zugraupe nur für die Herstellung von Rohren einsetzbar, bei denen keine großen Anforderungen hinsichtlich der Rundheit des Rohrquerschnitts gestellt werden, da durch die Anpreßkraft, mit der die beiden Zugraupen zur Erzeugung eines ausreichenden Reibschlusses gegeneinander gedrückt werden müssen, Verformungen nicht ausgeschlossen werden können.

Bei Rohren, an die große Anforderungen hinsichtlich der Formgenauigkeit gestellt werden oder bei Glattrohren, die aus sehr dünnwandigen Blechen hergestellt werden, können derartige Zugraupen nicht eingesetzt werden, insbesondere dann nicht, wenn die gesamte Kraft zum Durchzug durch die Einrichtung über die Zugvorrichtung aufgebracht werden muß, wie dies bei lose laufenden Formrollen der Fall ist. Zur Lösung dieser Probleme ist aus der US-A 3 023 300 ein sogenannter Spannbackenabzug bekannt geworden, bei dem mehrere Spannwagen vorgesehen sind, die an zwei parallel nebeneinander liegenden umlaufenden endlosen Zugketten befestigt sind und auf denen quer zur Umlaufrichtung bewegliche Spannbacken angeordnet sind. Die geöffneten Spannbacken werden beim Einlaufen in den Klemmbereich durch feststehende, parallel zum Rohrstrang verlaufende Führungsschienen gegeneinander geführt, bis sie den Rohrstrang umfassen und den zum Durchzug erforderlichen Reibschluß erzeugen. Am Ende der Führungsschienen werden die Spannbacken wieder geöffnet, so daß der Spannwagen über das Umlenkrad nach unten weggeführt werden kann. Die Zahl der Spannwagen und die Länge der Führungsschienen ist so bemessen, daß immer jeweils zwei Spannwagen gleichzeitig mit ihren Spannbacken das Rohr erfassen. Die Spannwagen mit den darauf angeordneten Spannbacken und den zugehörigen rollengestützten Betätigungsmechanismen stellen nicht nur komplizierte Bauteile dar, sondern weisen auch ein erhebliches Gewicht auf, so daß die Spannwagen nicht nur im Bereich des Zugtrums, d.h. also zwischen den Führungsschienen, sondern auch im Bereich des Leertrums auf Tragschienen geführt werden müssen. Die Vielzahl der Lagerstellen und die Vielzahl der aufeinander gleitenden und/oder abrollenden Teile hat einen entsprechenden Verschleiß zur Folge, so daß die Spannbacken entsprechend häufig nachgestellt werden müssen, um einen einwandfreien Reibschluß zwischen den das Rohr umgreifenden Backen und dem Rohr zu gewährleisten, ohne aber hierbei das Rohr zu verformen bzw. Preßmarken in die Oberfläche einzudrücken.

Da derartige Einrichtungen zum Herstellen von längsnahtgeschweißten Rohren so ausgelegt sind, daß mit ihnen jeweils Rohre mit unterschiedlichen Durchmessern innerhalb bestimmter Durchmesserbereiche herstellbar sind, ist es dann bei dem vorbekannten Spannbackenabzug erforderlich, entweder die einzelnen Spannwagen auszuwechseln oder aber an den Spannwagen die Spannbacken auszuwechseln. In jedem Fall muß dann jeder einzelne Spannwagen kontrolliert und genau einjustiert werden, damit die erforderliche Zugkraft aufgebracht wird, ohne daß die Rohroberfläche beschädigt wird.

Aus der US-A 1 321 463 ist eine Vorrichtung der eingangs bezeichneten Art bekannt, die eine Zugvorrichtung aufweist, bei der die beiden Endlosbänder aus gelenkig miteinander verbundenen Platten gebildet sind und wobei auf die einzelnen Platten jeweils eine Ziehbacke aufgeschraubt ist. Im Eingriffsbereich werden diese beiden Endlosbänder mit ihren Ziehbacken von der Rückseite her über ein Umlaufrollensystem gegen den zu transportierenden Materialstrang gepreßt. Der Nachteil dieser Vorrichtung besteht zum einen darin, daß die erforderliche Bauhöhe, d. h. die Dicke in Bezug auf die Andruckrichtung relativ groß sein muß, da aus Festigkeitsgründen sowohl die einzelne Platte als auch die daraufgeschraubte Ziehbacke eine Mindestdicke aufweisen muß. Ein weiterer Nachteil dieser Vorrichtung besteht darin, daß die Übertragung der Anpreßkraft von den Umlaufrollen auf den zu fördernden Materialstrang unmittelbar über die Rückenfläche der Gelenkplatten erfolgt. Hierbei ergeben sich zwangsläufig Druckstöße, wenn die Umlaufrollen jeweils über den Gelenkbereich der Gelenkplatten abrollen. Dies kann infolge Verschleißes bei längerer Betriebsdauer zur Verformung des Gelenkbereiches, zu Schäden an der Kette und letzlich auch zu Beschädigungen am zu fördernden Rohr führen.

Der Erfindung liegt nun die Aufgabe zugrunde, eine Zugvorrichtung der eingangs bezeichneten Art zu schaffen, die einen konstruktiv einfacheren Aufbau, geringeren Platzbedarf sowie eine größere Betriebssicherheit aufweist und darüber hinaus bei Änderungen des Profilquerschnitts des zu fördernden Materialstranges in einfacher Weise anpaßbar ist.

Diese Aufgabe wird gemäß der Erfindung dadurch gelöst, daß die Endlosbänder jeweils durch eine als Dreifachkette ausgebildete Gelenkkette gebildet werden, daß die außenliegenden Teilketten als Rollenketten ausgebildet sind, zwischen denen die innere Teilkette durch die Ziehbacken gebildet wird, daß die Ziehbacken jeweils über zwei benachbarte Gelenkbolzen mit den außenliegenden Teilketten verbunden sind und daß die verschiebbare Stützschiene über federnd abgestützte Druckspindeln einstellbar mit dem Maschinengestell verbunden ist. Diese Anordnung hat den Vorteil, daß die Endlosbänder sehr genau geführt und im Klemmbereich genau ausgerichtet bleiben, so daß die Profilrinnen der Ziehbacken den Rohrquerschnitt genau und großflächig umfassen, so daß selbst bei verhältnismäßig hohen Anpreßkräften das geförderte Rohr weder verformt wird noch Eindruckmarken erzeugt werden. Dies ist insbesondere bei der Herstellung von Präzisionsrohren von Bedeutung. Durch die Ausbildung der Endlosbänder als Gelenkkette in Form einer Dreifachkette ist eine dehnungsfreie und eine präzise Parallelführung der beiden gegeneinander gepreßten Zugtrume möglich. Dadurch, daß die Ziehbacken jeweils über zwei benachbarte Gelenkbolzen in die Kette integriert sind, ergibt sich eine niedrige Bauform, d.h. bezogen auf die Anpreßrichtung eine flache Anordnung, was insbesondere für die Kinematik im Bereich des Eingriffs mit dem einlaufenden Materialstrang von Vorteil ist. Ein weiterer Vorteil der Erfindung liegt darin, daß die Anordnung auf der Basis handelsüblicher Laschen- bzw. Rollenketten hergestellt werden kann. Da die als Umlenkräder ausgebildeten Kettenräder mit zwei parallelen Daumenreihen ausgeführt sind, ist hierdurch ein verkantungsfreier Durchzug des jeweiligen Zugtrums gewährleistet, d.h. die Profilrinnen der aufeinanderfolgenden Ziehbacken, von denen immer jeweils eine Vielzahl im Eingriff mit dem Materialstrang ist, bleiben während des gesamten Durchlaufs exakt ausgerichtet, so daß auch hierdurch Beschädigungen der Oberfläche des durchzuziehenden Materialstranges vermieden werden da keinerlei Kippmomente einwirken können. Durch die außenliegenden Laschen der äußeren Teilketten erfolgt selbst bei Gelenkbolzen mit geringem Durchmesser eine einwandfreie und gleichmäßige Übertragung der Zugkraft unmittelbar auf die Ziehbacken und damit auf den Materialstrang. Verformungen oder Überlastungen der Gelenkbolzen sind ausgeschlossen. Durch die vorzugsweise zentrale Verstellmöglichkeit der verstellbaren Stückschiene wird die Anpreßkraft über eine Vielzahl von Ziehbacken verteilt auf den Materialstrang übertragen. Die Reduzierung der Flächenpressung gilt aber auch in gleicher Weise für die Übertragung der Anpreßkraft jeweils zwischen der Stützschiene und der Innenseite des Zugtrums des Endlosbandes, so daß auch hier der Verschleiß sowohl bei einer Führung des Bandes auf der Stützschiene über die außenliegenden Teilketten (bei kleinen Rohrdurchmessern) als auch über die Rückenfläche der als Kettenteile ausgebildeten Ziehbacken (bei großen Rohrdurchmessern) reduziert wird. Überraschend hat sich hierbei gezeigt, daß bei gleitender Führung und entsprechender Schmierung zwischen der Innenseite des Endlosbandes und der Stützschiene keine nennenswerte Erhöhung der erforderlichen Antriebskraft infolge Reibung zwischen Endlosband und Stützschiene eintritt. Dadurch, daß die eine Stützschiene feststehend und die andere Stützschiene über federnd abgestützte Druckspindeln einstellbar mit dem Maschinengestell verbunden ist, ergibt sich der Vorteil, daß die feststehende Stützschiene eine genaue, unveränderbare Ausrichtung der Achse des zu fördernden Materialstrangs zu den vorgeschalteten und nachgeschalteten Einrichtungen bietet, während die Abstützung der einstellbaren federn abgestützten Stützschiene eine genaue Einstellung der Anpreßkraft ermöglicht. Das die Druckspindel abstützende Federpaket kann hierbei geeicht werden, so daß über den Einstellweg der Vorspannung dieses Federpaketes eine definierte Antriebskraft reproduzierbar eingestellt werden kann, so daß aufwendige Kraft- oder Druckmeßeinrichtungen nicht erforderlich sind.

Zur Abstützung des Zugtrums ist in einer Ausgestaltungsform vorgesehen, daß die außenliegenden Teilketten je auf einem mit einer gleitfähigen Oberflächenbeschichtung versehenen Teil der zugeordneten Stützschiene geführt sind.

In einer anderen Ausgestaltung, wie sie insbesondere bei zu fördernden Rohrquerschnitten von 30 mm und mehr zweckmäßig ist, wird erfindungsgemäß jeder Ziehbacke auf der nach innen gerichteten Seite des Endlosbandes bzw. der Gelenkkette ein Gleitkörper zugeordnet. Damit erfolgt die Durchleitung der Anpreßkraft von der Stützschiene über die Ziehbacken auf das Rohr unmittelbar, d.h. ohne Belastung der die Ziehbacken mit der Gelenkkette verbindenden Gelenkbolzen. Die Gelenkbolzen unterliegen daher nur dem durch die Zugkraft bedingten Verschleiß. Überraschend hat sich hierbei gezeigt, daß im Zusammenwirken mit einem Schmiermittel zwischen der Gleitfläche der Stützschiene und den Gleitkörpern selbst bei verhältnismäßig hohen Anpreßkräften aufgrund der hydrodynamischen Wirkung des Schmiermittels im Gleitspalt praktisch keine die erforderliche Antriebskraft erhöhende Reibung auftritt. Die Gleitkörper sind zweckmäßigerweise jeweils auf der Rückseite der Ziehbacken angeordnet und lösbar mit diesen verbunden. In einer bevorzugten Ausgestaltung der Erfindung ist ferner vorgesehen, daß jeweils die Länge der Ziehbacke in etwa der Länge der Lasche der Gelenkkette entspricht und daß die Profilrinne sich jeweils im Endbereich erweitert. Hierdurch ist gewährleistet, daß im Bereich der Umlenkräder und zwar sowohl beim tangentialen Einlaufen als auch beim Auslaufen am Zugtrum die Profilrinnen der Ziehbacken nicht auf der Oberfläche des Materialstranges abwälzend mit diesem in Eingriff kommen, sondern sich praktisch gleichflächig am Außenumfang des Materialstranges anlegen. Dieser Vorgang wird noch dadurch unterstützt, daß jeweils im Einlaufbereich und im Auslaufbereich die an sich mit ihrer Stützfläche parallel zum Materialstrang verlaufenden Stützschienen eine Einlaufschräge für die Gleitkörper aufweisen, so daß die durch die Zustellung der verstellbaren Stützschiene bewirkte Ampreßkraft erst dann wirksam wird, wenn die Profilrinnen der beiden einander zugeordneten Ziehbacken praktisch parallel zueinander ausgerichtet sind.

Die Materialauswahl und die Materialpaarungen können in unterschiedlicher Weise getroffen werden. Insbesondere für größere Querschnitte des zu fördernden Materialstranges ist es zweckmäßig, die Ziehbacken aus gehärtetem Stahl, die Gleitkörper aus Bronze und die an den Gleitkörpern anliegende Fläche der Stützschiene aus gehärtetem Stahl herzustellen. In einer anderen Ausführungsform, wie sie insbesondere für Rohrstränge mit kleineren Durchmessern in der Größenordnung unterhalb 30 mm zweckmäßig ist, sind die Ziehbacken und ggf. auch die Gleitkörper aus einem gummielastischen Werkstoff mit großer Härte hergestellt.

In zweckmäßiger Ausgestaltung der Erfindung ist ferner vorgesehen, daß wenigstens zwei Druckspindeln vorgesehen sind, die über ein Stellmittel miteinander verbunden und über einen zentralen Stellantrieb synchron verstellbar sind.

In Ausgestaltung der Erfindung ist ferner vorgesehen, daß die klemmende Länge des Zugtrums etwa dem 30-fachen des Durchmessers des zu fördernden Rohrstranges entspricht. Hierdurch ist es möglich, mit einer derartigen Zugvorrichtung bei einer Einrichtung zur Herstellung von längsnahtgeschweißten Rohren auf jeden Antrieb der Formrollen, der Schweißrollen und auch der Kalibrierrollen zu verzichten, da ohne Beschädigung oder Verformung des fertigen Rohrstranges die gesamte Verformungsarbeit einschließlich der aufzubringenden Kraft für die Entgratung durch die Zugvorrichtung aufgebracht werden kann. Dies hat insbesondere Vorteile im Bereich der Formung des Schlitzrohres aus dem Metallband, da lose laufende Formrollen gegenüber angetriebenen Formrollen den Vorteil haben, daß sich die für die jeweilige Verformung optimale Drehzahl selbst einstellen kann und dement-sprechend keine Differenzkräfte zwischen auf-einanderfolgenden Formrollenpaaren auftreten können.

Die Erfindung wird anhand schematischer Zeich-nungen eines Ausführungsbeispieles näher erläu-tert. Es zeigen:

Fig. 1 eine Seitenansicht einer Vorrichtung zum Herstellen von längsnahtgeschweißten Rohren aus einem Metallba·· i mit einer erfindungsgemäßen Zug-vorrichtung,
Fig. 2 eine Seitenansicht der Zugvorrichtung in größerem Maßstab,
Fig. 3 die Führung der Ziehbacken im Einlaufbereich,
Fig. 4 einen Vertikalschnitt durch ein als Gelenkkette ausgebildetes Endlosband mit Stützschiene und Verstelleinrichtung,
Fig. 5 eine anderen Ausführungsform einer Stützschiene.

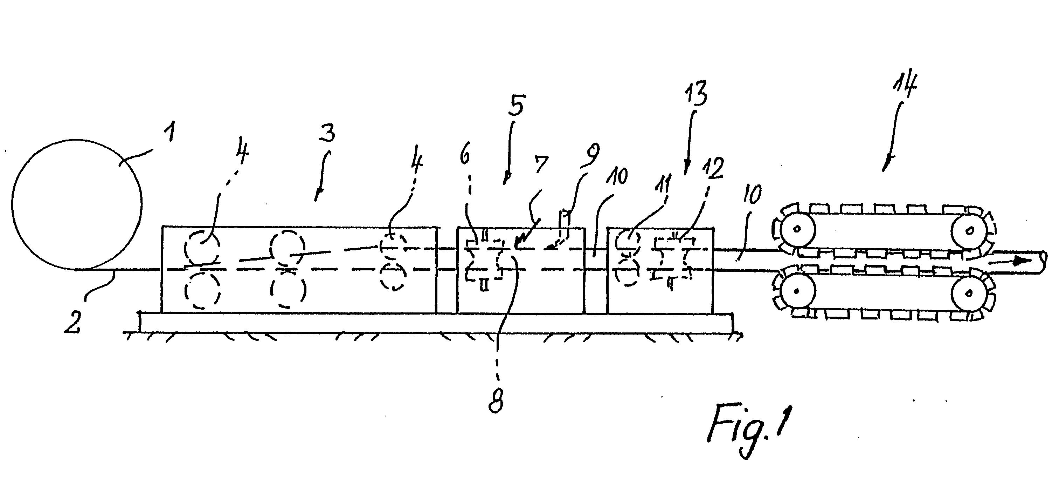

Die in Fig. 1 dargestellte Vorrichtung zur Herstellung von längsnahtgeschweißten Rohren aus einem Blechband besteht im wesentlichen aus einer Liefer-spule 1, auf die ein Metallband 2 aufgewickelt ist. Das Metallband 2 wird nun durch eine mit mehreren Formrollen versehene Formstation 3 geführt, in der aus dem flachen Metallband mit Hilfe von mehreren Formrollenpaaren 4 ein Schlitzrohr hergestellt wird, das dann eine Schweißstation 5 durchläuft, in der es durch ein Schweißrollenpaar 6 gehalten und der Längsschlitz mit Hilfe einer Schweißelektrode 7 zu einer geschlossenen Naht verschweißt wird. Ausbildung und Funktionsweise der Schweißeinrichtung sind bekannt, wobei die Art der Schweißeinrichtung sich nach dem verwendeten Bandmaterial und der gewünschten Qualität richtet. Das nunmehr fertig geschweißte Rohr 8 wird mit Hilfe einer Entgratungseinrichtung 9 entgratet, wobei hier nur das an der Außenwandung angreifende Entgratungsmesser gezeigt ist. Auch der Aufbau und die Funktionsweise der Entgratungseinrichtung sind bekannt. Nach dem Entgraten durchläuft das entgratete Rohr 10 eine wenigstens zwei um 90° zueinander versetzt angeordnete Rollenpaare 11, 12 aufweisende Kalibrierstation 13, in der dem Rohr die endgültige Form, beispielsweise eine nahezu exakte Kreisform gegeben wird.

Über eine Zugvorrichtung 14 wird der Materialstrang durch die gesamte Anordnung hindurchgezogen, da alle Rollenpaare und zwar sowohl die Rollenpaare der Formstation 3 als auch der Schweißstation 5 und der Kalibrierstation 13 lose laufen, d.h. ohne eigenen Antrieb ausgebildet sind.

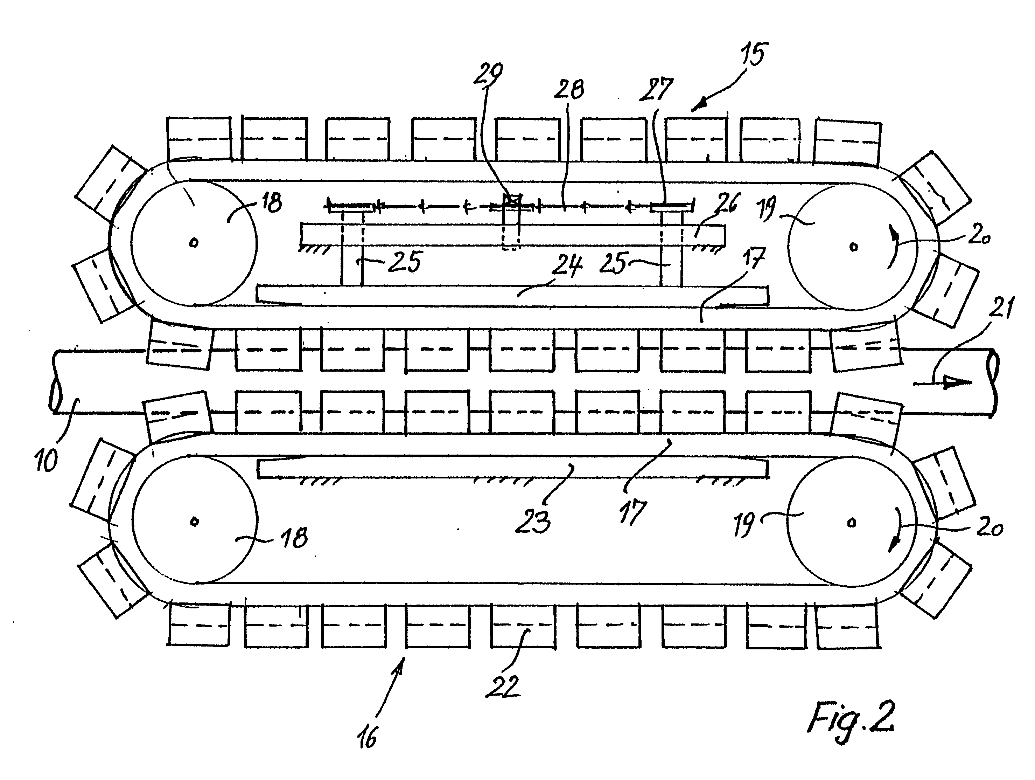

Die Zugvorrichtung 14 ist in Fig. 2 in größerem Maßstab dargestellt. Diese besteht aus zwei parallel zueinander geführte Endlosbänder 15 und 16, die jeweils mit ihrem Zugtrum 17 auf gegenüberliegenden Seiten an dem entgrateten Rohr 10 anliegen. Die beiden Endlosbänder 15 und 16 sind jeweils über Umlenkräder 18, 19 geführt, wobei zumindest ein Paar der Umlenkräder, beispielsweise die Umlenkräder 19 über ein nicht näher dargestelltes Koppelgetriebe mit einem Antrieb verbunden sind und bei einer Drehung in Richtung des Pfeiles 20 das Rohr 10 in Richtung des Pfeiles 21 gefördert wird.

Die Endlosbänder 15 und 16 sind auf ihrer Außenseite mit einer Vielzahl von Ziehbacken 22 versehen, die mit einer nach außen gerichteten Profilrinne versehen sind, so daß die einander zugekehrten Ziehbacken 22 sich im Querschnitt zur Querschnittsform des zu fördernden Materialstranges ergänzen. Bei dem hier dargestellten Beispiel der Förderung eines Rohres entspricht die Profilrinne im Querschnitt einem Halbkreis. Die Ausbildung der Ziehbacken wird nachstehend noch näher erläutert werden.

Jeder Zugtrum 17 stützt sich auf seiner Innenseite auf einer Stützschiene 23 bzw. 24 ab, die parallel zum zu fördernden Rohr 10 ausgerichtet sind und den durch die Ziehbacken 22 definierte Klemmspalt begrenzen. Die zweckmäßigerweise untenliegende Stützschiene 23 ist mit einem hier nicht näher dargestellten Maschinengestell fest verbunden, während die obenliegende Stützschiene für das Endlosband 15 quer zur Durchlaufrichtung des Materialstranges verschieb- und feststellbar am Maschinengestellt gelagert ist. Die Stützschiene 24 stützt sich hierbei über zwei parallele Druckspindeln 25 am Maschinengestell ab, die in einer entsprechenden Gewindeführung 26 gelagert sind. Beide Druckspin-deln 25 sind an ihrem freien Ende jeweils mit einem Kettenrad 27 versehen, wobei beide Kettenräder mit einer Rollenkette 28 als Stellmittel miteinander verbunden sind und über ein zentrales Stellrad 29 verstellt werden können. Die Druckspindeln 25 sind hierbei zweckmäßigerweise federnd abgestützt, so daß durch die Vorgabe einer Federvorspannung eine definierte Anpreßkraft eingestellt werden kann, mit der über die Stützschiene 24 die Ziehbacken 22 des Endlosbandes 15 gegen die Ziehbacken 22 des Endlosbandes 16 angedrückt werden. Die Ziehbacken 22 umgreifen mit ihrer Profilrinne die Außenkontur des zu fördernden Materialstranges, beispielsweise des Rohres 10, so daß das Rohr 10 bei Drehung der Umlenkräder 19 durch Reibschluß in Richtung des Pfeiles 21 gefördert wird. Da eine Vielzahl von Ziehbacken 22 über eine große Rohrlänge am Rohr anliegen, kann eine hohe Aneßkraft und damit auch eine hohe Reibkraft auf das Rohr aufgebracht werden, ohne daß es zu Verformungen oder Beschädigungen des Rohres kommt, da aufgrund der großen an der Rohraußenwandung andrückenden Fläche die Flächenpressung unter den kritischen Werten gehalten werden kann.

Grundsätzlich ist es möglich, die Endlosbänder 15 und 16 beispielsweise in Form von Zahnriemen oder dgl. auszubilden, die mit innenliegender Verzahnung über die mit entsprechend verzahnter Oberfläche versehenen Umlenkräder 18 und 19 geführt werden und die auf ihrer Außenseite mit einer Vielzahl von Ziehbacken 22 versehen sind. Besonders zweckmäßig ist es jedoch, wenn die Endlosbänder jeweils durch eine Gelenkkette, insbesondere eine Rollenkette gebildet werden, da diese bei den hier infrage stehenden Belastungen elastisch praktisch nicht verformbar sind, so daß hohe Längskräfte ohne Re-lativverschiebungen zwischen den Ziehbacken ei-nerseits und der Außenfläche des zu fördernden Materialstranges andererseits übertragen werden können.

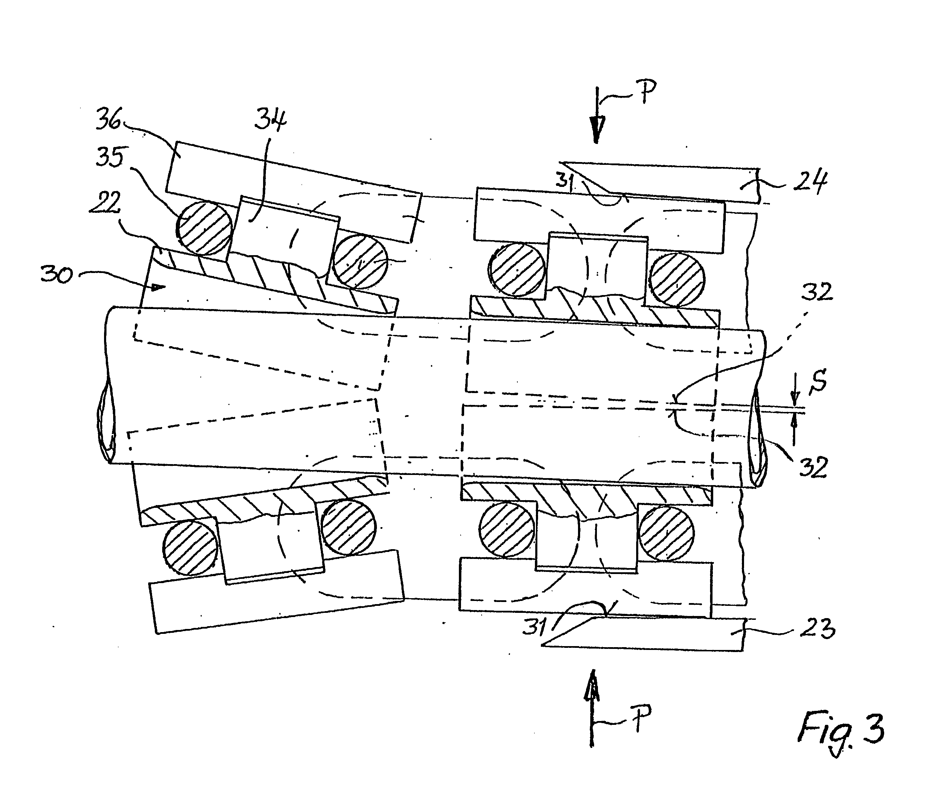

In Fig. 3 ist in einer weiteren Vergrößerung, teilweise im Schnitt, der Einlaufbereich zwischen den Umlenkrädern 18 dargestellt. Fir den beschriebenen Transport eines längsnahtgeschweißten Rohres 10 sind die Ziehbacken 22 mit einer im Querschnitt halbkreisförmigen Profilrinne 30 versehen, die sich jeweils in ihrem Endbereich geringfügig erweitert. Hierdurch ist gewährleistet, daß die jeweils von den Umlenkrädern 18 unter einer Neigung zur Rohrachse zulaufenden Ziehbacken 22 nicht mit einer Kante auf den Außenumfang auftreffen, sondern sich "sanft" und vollflächig am Außenumfang des zu fördernden Rohres 10 anlegen. Dieser Vorgang wird noch dadurch begünstigt, daß die Stützschienen 23 und 24 im Einlaufbereich eine Abschrägung 31 aufweisen, so daß die Wandung der Profilrinne 30 erst dann voll am Außenumfang des zu fördernden Roh-res 10 zur Arlage kommt, wenn die betreffende Ziehbacke im wesentlichen parallel zur Rohrachse ausgerichtet ist.

Die Profilrinnen 30 der einander zugeordneten Ziehbacken 22 ergänzen sich zu einem vollständigen Kreis, wobei die Tiefe der Profilrinne so bemessen ist, daß sie nicht einen vollständigen Halbkreis bildet, sondern zwischen den einander gegenüberliegenden Randkanten 32 der in der Eingriffsposition einander gegeniberliegenden Ziehbacken 22' einen Spalt S in der Größenordnung von etwa 1 mm entsteht. Hierdurch ist gewährleistet, daß die im wesentlichen im Bereich des Grundes der Profilrinnen 30 auf die Rohraußenwandung einwirkenden Kräfte (hier durch die beiden Pfeile P der resultierenden Kräfte dargestellt), das vorher kalibrierte Rohr nicht wieder verformt. Die Randbereiche 32 der Profilrinne 30 haben hier im wesentlichen Stützfunktion, um ein seitliches Herausdrücken unter dem Einfluß der resultierenden Kräfte P zu verhindern.

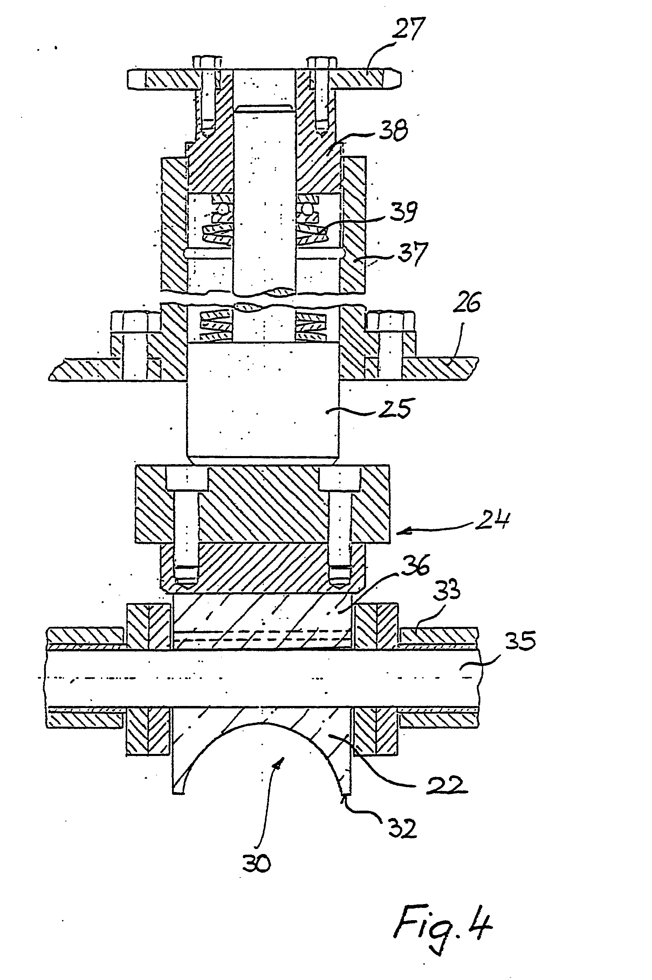

Die Schnittdarstellung in Fig. 4 zeigt eine Ausführungsform, wie sie insbesondere für größere Rohrdurchmesser in der Größenordnung von bei-spielsweise 60 mm Außendurchmesser eingesetzt wird. Die Gelenkkette ist hierbei als sogenannte Dreifachkette ausgeführt, wobei die beiden außenliegenden Teilketten 33 als Rollenketten ausgeführt sind und die dazwischenliegende innere Teilkette durch die aufeinanderfolgenden Ziehbacken 22 gebildet wird. Die sogenannte innere Teilkette hat hierbei lediglich die Funktion, die Längskraft auf die Ziehbacken 22 zu übertragen. Hierzu sind, wie in Fig. 3 angedeutet, die Ziehbacken 22 geteilt ausgebildet, wobei der mit der Profilrinne versehene Teil einen zapfenförmigen Ansatz 34 aufweist, der zwischen den beiden Gelenkbolzen 35 des zugehörigen Laschenfachs hindurchgesteckt ist und von der Innenseite her mit einem Gleitkörper 36 gegen die Gelenkbolzen 35 klemmend verschraubt ist.

Die außenliegenden Teilketten 33 werden dann iber entsprechend zweireihig als Kettendaumenräder ausgebildete Umlenk räder 18 und 19 geführt, wobei über den hierdurch bewirkten Formschluß die exakte Zuordnung der Ziehbacken beider Zugtrume 17 in der Eingriffszone gewährleistet ist.

Über die Gleitkörper 36 stützen sich die Ziehbacken 22 auf der als Gleitfläche jeweils ausgebildeten Stützschiene 23 bzw. 24 ab. Wie der Querschnitt gemäß Fig. 4 zeigt, ist die Stützschiene 24 über Druckspindeln 25 an den Spindelführungen 26 abgestützt. Die Druckspindel 25 ist bei dem dargestellten Ausführungsbeispiel so ausgebildet, daß eine Stützstange kolbenförmig in einer Führungsbohrung 37 geführt ist, deren außenliegendes Ende durch einen Gewindekopf 38 gleitend hindurchgefihrt ist. Zwischen dem Gewindekopf 38 und einem entsprechenden Ansatz der Druckspindel 25 innerhalb der Bohrung 27 ist eine Druckfeder 39, beispielsweise in Form eines Tellerfederpaketes angeordnet, so daß über Vorspannung dieses Tel-lerfederpaketes eine definierte Druckkraft über die Stützschiene 24 urd die darüber geführten Gleitstücke 36 auf das Rohr 10 ausgeübt werden kann.

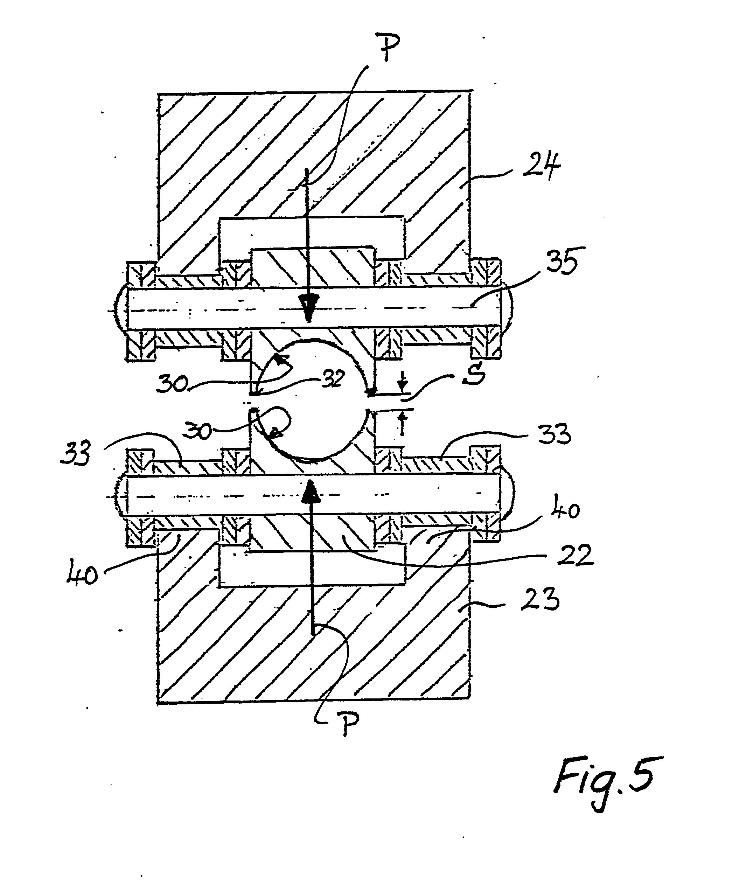

Bei der in Fig. 5 dargestellten anderen Ausführungsform erfolgt die Abstützung an den Stützschienen 23, 24 nicht unmittelbar über die Ziehbacken 22, sondern durch entsprechende Gleitzonen 40 an den Stützschienen 23, 24, auf denen die Teilketten 33 aufliegen.

Bei der Ausführungsform gemäß Fig. 4 sind die Materialpaarungen zweckmäßigerweise so gewählt, daß die Ziehbacken 22 aus gehärtetem Stahl, die Gleitkörper 36 aus Bronze und die an den Gleitkörpern 36 angeliegende Fläche der Stützschienen 23, 24 aus gehärtetem Stahl mit geschliffener Oberfläche bestehen. Bei geringeren Rohrdurchmessern, beispielsweise von etwa 10 bis 30 mm ist es auch möglich, die Ziehbacken 22 und die Gleitkörper aus einem gummielastischen Werkstoff mit großer Härte herzustellen. Dies gilt auch für die Ausführungsform gemäß Fig. 5. Bei dieser Form entfallen die mit den Ziehbacken verbundenen Gleitkörper. An ihre Stelle treten die aus gleitfähigem Material hergestellten Teile 40 der Stützschienen 23, 24. Dies kann beispielsweise eine Bronzeleiste sein oder aber auch ein Kunstlö stoff mit hoher Abriebfestigkeit, wie beispielsweise PTFE oder dgl..

Bei der Verwendung einer Gelenkkette werden die Ziehbacken 22 zweckmäßigerweise so bemessen, daß die klemmende Länge 1 der Profilrinne maximal der Kettenteilung entspricht. Um beispielsweise bei Rohren, insbesondere dünnwandigen Rohren zu niedrigen Flächenpressungen trotz großer Klemmkraft zu kommen, wird für die Ziehbacke vorteilhaft ein Verhältnis von klemmender Länge 1 zum Außendurchmesser d des Rohres on 1/d = 2/1 bis 1/1 vorgegeben.

## Patentansprüche

1. Zugvorrichtung für den kontinuierlichen Durchzug eines Stangen- oder rohrförmigen Materialstranges, insbesondere für den Materialdurchzug an einer Einrichtung zum Herstellen von längsnahtgeschweissten Rohren aus einem Metallband, das durch Formrollen (4) zur einem Schlitzrohr geformt und anschliessend zu einem geschlossenen Rohr (8, 10) verschweisst wird, mit zwei parallel zueinander über Umlenkräder (18, 19) geführten angetriebenen Endlosbändern (15, 16), deren Zugtrums (17) an den zu fördernden Materialstrang (10) angedrückt sind, wobei die Endlosbänder jeweils auf ihrer aussenliegenden Seite mit einer Vielzahl von Ziehbacken (22) versehen sind, die auf ihrer nach aussen gerichteten Seite eine in Bandlängsrichtung verlaufende Profilrinne (30) aufweisen, die so geformt ist, dass die Profilrinnen (30) von je zwei einander zugekehrten Ziehbacken (22) im Querschnitt sich zur Querschnittsform des zu fördernden Materialstrangs (10) ergänzen, wobei jedem Endlosband (15, 16) eine an der Innenseite des Zugtrums (17) anliegende Stützschiene (23, 24) zugeordnet ist, und wobei wenigstens eine der Stützschienen (24) quer zum Materialstrang (10) verschieb- und feststellbar gelagert ist, dadurch gekennzeichnet, dass die Endlosbänder (15, 16) jeweils durch eine als Dreifachkette ausgebildete Gelenkkette gebildet werden, dass die aussenliegenden Teilketten (33) als Rollenketten ausgebildet sind, zwischen denen die innere Teilkette durch die Ziehbacken (22) gebildet wird, dass die Ziehbacken (22) jeweils über zwei benachbarte Gelenkbolzen (35) mit den aussenliegenden Teilketten (33) verbunden sind und dass die verschiebbare Stützschiene (24) über federnd abgestützte Druckspindeln (25) einstellbar mit dem Maschinengestell verbunden ist.

2. Zugvorrichtung und Anspruch 1 dadurch gekennzeichnet, daß die außenliegenden Teilketten (33) je auf einem mit einer gleitfähigen Oberflächenbeschichtung versehenen Teil (40) der zugeordneten Stützschiene (23, 24) geführt sind.

3. Zugvorrichtung nach Anspruch 1 dadurch gekennzeichnet, daß jeder Ziehbacke (22) auf der nach innen gerichteten Seite des Endlosbandes (15, 16) ein Gleitkörper (36) zugeordnet ist.

4. Zugvorrichtung nach Anspruch 3, dadurch gekennzeichnet, daß die Gleitkörper (36) jeweils auf der Rückseite der Ziehbacken (22) angeordnet und lösbar mit diesen verbunden sind.

5. Zugvorrichtung nach einem der Ansprüche 1 bis 4, dadurch gekennzeichnet, daß die Länge der Ziehbacken (22) in etwa der Länge der Laschen der Gelenkkette entspricht und daß die Profilrinne (30) sich jeweils im Endbereich erweitert.

6. Zugvorrichtung nach einem der Ansprüche 1 bis 5, dadurch gekennzeichnet, daß die Ziehbacken (22) aus gehärtetem Stahl, die Gleitkörper (36) aus Bronze und die an den Gleitkörpern (36) angeliegende Fläche der Stützschiene (23, 24) aus gehärtetem Stahl bestehen.

7. Zugvorrichtung nach einem der Ansprüche 1 bis 6, dadurch gekennzeichnet, daß die Ziehbacken (22) und die Gleitkörper (36) aus einem gummielastischen Werkstoff mit großer Härte bestehen.

8. Zugvorrichtung nach einem der Ansprüche 1 bis 7, dadurch gekennzeichnet, daß wenigstens zwei Druckspindeln (25) vorgesehen sind, die über ein Stellmittel (28) miteinander verbunden über einen zentralen Stellantrieb (29) synchron verstellbar sind.

9. Zugvorrichtung nach einem der Ansprüche 1 bis 8, dadurch gekennzeichnet, daß die treibenden Umlenkräder (19) beider Endlosbänder (15, 16) zwangläufig synchron angetrieben werden.

10. Zugvorrichtung nach einem der Ansprüche 1 bis 9, dadurch gekennzeichnet, daß die klemmende Länge des Zugtrums (17) etwa dem 30-fachen des Durchmessers des zu fördernden Rohrstranges (10) entspricht.

11. Zugvorrichtung nach einem der Ansprüche 1 bis 10, dadurch gekennzeichnet, daß das Verhältnis der klemmenden Länge 1 einer Ziehbacke (22) zum Außendurchmesser d des zu fördernden Rohres 1/d = 2/1 bis 1/1 beträgt.

## Claims

1. Drawing device for the continuous drawing through of a rod-shaped or pipe-shaped billet of material, in particular for drawing material through an apparatus for producing pipes welded along the longitudinal seam from a metal strip which is shaped into an open-seam pipe by shaping rollers (4) and is then welded to form a closed pipe (8, 10), with two driven endless belts (15, 16) which are guided parallel to each other via deflection wheels (18, 19), the driving sides (17) of which belts are pressed against the billet of material (10) which is to be conveyed, with the endless belts each being provided on their outer side with a large number of drawing jaws (22) on their outward facing side which have a profiled channel (30) extending in the longitudinal direction of the belt, which channel is shaped so that the cross-sections of the profiled channels (30) of two drawing jaws (22) facing each other in each case complement each other to form the crosssectional shape of the billet of material (10) which is to be conveyed, each endless belt (15, 16) being allocated a supporting rail (23, 24) bearing on the inside of the driving side (17), and at least one of the supporting rails (24) being mounted so that it can be displaced and fixed transversely to the billet of material (10), characterised in that the endless belts (15, 16) are each formed by a link chain designed as a triple chain, that the outer partial chains (33) are designed as roller chains between which the inner partial chain is formed by the drawing jaws (22), that the drawing jaws (22) are each connected to the outer partial chains (33) via two adjacent hinge pins (35) and that the displaceable supporting rail (24) is adjustably connected to the machine frame via resiliently supported pressure screws (25).

2. Drawing device according to Claim 1, characterised in that the outer partial chains (33) are each guided on a part (40) of the associated supporting rail (23, 24) provided with a slidable surface coating.

3. Drawing device according to Claim 1, characterised in that each drawing jaw (22) is allocated a sliding member (36) on the inward-facing side of the endless belt (15, 16).

4. Drawing device according to Claim 3, characterised in that the sliding member (36) in each case is arranged on the back of the drawing jaws (22) and is connected detachably thereto.

5. Drawing device according to one of Claims 1 to 4, characterised in that the length of the drawing jaws (22) approximately corresponds to the length of the plates of the link chain and that the profiled channel (30) widens in the end region in each case.

6. Drawing device according to one of Claims 1 to 5, characterised in that the drawing jaws (22) are made of hardened steel, the sliding members (36) are made of bronze and the surface of the supporting rail (23, 24) bearing on the sliding members (36) is made of hardened steel.

7. Drawing device according to one of Claims 1 to 6, characterised in that the drawing jaws (22) and the sliding members (36) are made of a rubber-elastic material of great hardness.

8. Drawing device according to one of Claims 1 to 7, characterised in that at least two preseure screws (25) are provided which, interconnected by a positioning means (28) are synchronously adjustable via a central actuating drive (29).

9. Drawing device according to one of Claims 1 to 8, characterised in that the driving deflection wheels (19) of both endless belts (15, 16) are positively synchronously driven.

10. Drawing device according to one of Claims 1 to 9, characterised in that the gripping length of the driving side (17) approximately corresponds to 30 times the diameter of the line of pipes (10) to be conveyed.

11. Drawing device according to one of Claims 1 to 10, characterised in that the ratio of the clamping length 1 of a drawing jaw (22) to the external diameter d of the pipe which is to be conveyed is 1/d = 2/1 to 1/1.

**Revendications**

1. Dispositif de tirage pour le tirage continu d'un cordon de matériau en forme de rond plein ou de tube, en particulier pour le tirage du matériau sur une installation de fabrication de tubes soudés longitudinalement à partir d'une bande de métal que des galets de formage (4) forment en un tube fendu puis ui est soudé pour donner un tube fermé (8, 10), comportant deux tapis sans fin (15, 16) entraînés, qui sont guidés parallèlement l'un à l'autre par l'intermédiaire de roues de changement de direction (18, 19), dont les brins de tirage (17) s'appliquent contre le cordon (10) du matériau à faire avancer, étanu précisé que les tapis sans fin sont respectivement munis, sur leur face située à l'extérieur, d'une pluralité de mors de tirage (22) qui, sur leur face orientée vers l'extérieur, présentent une gouttière profilée (30) qui est dirigée dans la direction longitudinale du tapis et dont la forme est telle que la gouttière profilées (30) de, respectivement, deux mors de tirage (22) orientés l'un vers l'autre, se complètent en section pour donner la forme de section du cordon (10) de matériau à faire avancer, étant précisé qu'à chaque tapis sans fin (15, 16) correspond un rail d'appui (23, 24) qui appuie contre la face intérieure du brin de tirage (17), et étant précisé qu'au moins l'un des rails d'appui (24) est porté, transversalement par rapport au cordon de matériau (10), avec liberté de coulissement et de blocage, caractérisé par le fait que les tapis sans fin (15, 16) sont respectivement formés par une chaîne articulée conçue sous forme de chaîne triple, par le fait que les chaîne partielle (33) situées à l'extérieur sont conçues sous forme de chaînes à rouleaux entre lesquelles la chaîne partielle intérieure est formée par les mors de tirage (22), par le fait que les mors de tirage (22) sont respectivement reliés, par l'intermédiaire de deux axes d'articulation voisins (35), avec les chaînes partielles (33) situées à l'extérieur et par le fait que le rail d'appui coulissant (24) est relié au bâti de la machine avec possibilité de réglage par l'intermédiaire de broches de pression (25) appuyées élastiquement.

2. Dispositif de tirage selon la revendication 1, caractérisé par le fait que les chaînes partielles (33) situées à l'extérieur sont chacune guidées sur une partie (40), munie d'un revêtement de surface apte au glissement, du rail d'appui correspondant (23, 24).

3. Dispositif de tirage selon la revendication 1, caractérisé par le fait qu'à chaque mors de tirage (22) correspond, sur la face du tapis sans fin (15, 16) orientée vers l'intérieur, une pièce de glissement (36).

4. Dispositif de tirage selon la revendication 3, caractérisé par le fait que les pièces de glissement (36) sont respectivement disposées sur la face arrière des mors de tirage (22) et sont reliées avec eux de façon amovible.

5. Dispositif de tirage selon l'une des revendications 1 à 4, caractérisé par le fait que la longueur des mors de tirage (22) correspond à peu près à la longueur des maillons de la chaîne articulée et par le fait que la gouttière profilée (30) s'élargit chaque fois dans la zone d'extrémité.

6. Dispositif de tirage selon l'une des revendications 1 à 5, caractérisé par le fait que les mors de tirage (22) sont constitués d'acier trempé, les pièces de glissement (36), de bronze et la surface des rails d'appui (23, 24) appliqué contre les pièces de glissement (36), d'acier trempé.

7. Dispositif de tirage selon l'une des revendications 1 à 6, caractérisé par le fait que les mors de tirage (22) et les pièces de glissement (36) sont constitués d'un matériau à élasticité de type caoutchouc et de grande dureté.

8. Dispositif de tirage selon l'une des revendications 1 à 7, caractérisé par le fait qu'il est prévu au moins deux broches de pression (25) qui sont reliées l'une à l'autre par l'intermédiaire d'un moyen de positionnement (28) et sont réglables en synchronisme par l'intermédiaire d'un mécanisme central d'entraînement en position (29).

9. Dispositif de tirage selon l'une des revendications 1 à 8, caractérisé par le fait que les roues motrices (19) de changement de direction des deux tapis sans fin (15, 16) sont entraînées obligatoirement en sychronisme.

10. Dispositif de tirage selon l'une des revendications 1 à 9, caractérisé par le fait que la longueur de bridage du brin de tirage (7) correspond à peu près à 30 fois le diamètre du cordon tubulaire à faire avancer (10).

11. Dispositif de tirage selon l'une des revendications 1 à 10, caractérisé par le fait que le rapport entre la longueur de bridage 1 d'un mors de tirage (22) et le diamètre extérieur d du tube à transporter vaut 1/d = 2/1 à 1/1.

Fig.1

EP 0 254 028 B1

Fig. 2

EP 0 254 028 B1

Fig. 3

Fig.4

Fig.5